# EUROPÄISCHE PATENTSCHRIFT

(11) **EP 1 638 722 B1**
(45) Veröffentlichungstag und Bekanntmachung des Hinweises auf die Patenterteilung: **03.10.2007**
(21) Anmeldenummer: 04738664.4
(22) Anmeldetag: 11.06.2004
(51) Int. Cl.: B23C 3/18

(54) **FRÄSVERFAHREN ZUR FERTIGUNG VON BAUTEILEN**
MILLING METHOD USED FOR PRODUCING STRUCTURAL COMPONENTS
PROCEDE DE FRAISAGE PERMETTANT DE PRODUIRE DES COMPOSANTS

(30) Priorität: 19.06.2003 DE 10327623
(43) Veröffentlichungstag der Anmeldung: 29.03.2006
(73) Patentinhaber: MTU Aero Engines GmbH, 80995 München (DE)
(72) Erfinder: GLÄSSER, Arndt, 85221 Dachau (DE)
(86) Internationale Anmeldenummer: PCT/DE2004/001212
(87) Internationale Veröffentlichungsnummer: WO 2004/113000

(56) Entgegenhaltungen:
- EP-A- 1 034 865
- EP-A- 1 356 886

## Beschreibung

Die Erfindung betrifft ein Fräsverfahren zur Fertigung von Bauteilen nach dem Oberbegriff des Patentanspruchs 1.

Die hier vorliegende Erfindung betrifft das Gebiet der Frästechnik, insbesondere das HSC-Fräsen (High Speed Cutting Fräsen), welches auch als HPC-Fräsen (High Performance Cutting Fräsen) bezeichnet wird, und zwar den Fall des sogenannten trochoiden Fräsens.

EP 1 356 886 A1 zeigt ein Verfahren zum trochoiden Fräsen, bei dem ein Fräswerkzeug bzw. ein Fräser, der einen gewissen Werkzeugradius aufweist, zur Gewährleistung einer zentrischen Rotation des Fräsers um eine Achse desselben drehend angetrieben wird. Ein Bezugspunkt des Fräsers, der vorzugsweise auf der Achse liegt, wird gleichzeitig zur Fräsbearbeitung auf einer gekrümmten Bahn bewegt, wobei nach dem Stand der Technik beim konventionellen trochoiden Fräsen diese Bahn kreisförmig ist. Der Bewegung des Fräswerkszeugs bzw. des Fräsers entlang dieser Bahn wird eine translatorische Vorschubbewegung des Bezugspunkts überlagert. Die Überlagerung dieser drei Bewegungen des Fräswerkszeugs - also die Überlagerung der zentrischen Rotation des Fräswerkszeugs um seine Achse, mit der Bewegung des Bezugspunkts des Fräswerkszeugs auf einer Kreisbahn und mit der translatorischen Vorschubbewegung des Bezugspunkts des Fräswerkzeugs - resultiert in einer Bewegung des Fräswerkszeugs im Sinne einer Trochoide oder Zykloide.

Für einen stabilen Fräsprozess beim trochoiden Fräsen ist von Bedeutung, dass die maximal zulässigen Schnittkräfte am Fräswerkzeug nicht überschritten werden. Weiterhin müssen die sich beim Fräsen ergebenden Späne hinsichtlich Spandicke und Spanlänge so beschaffen sein, dass die Späne problemlos über die Kanäle des Fräswerkzeugs abgeführt werden können. Um dies zu gewährleisten, werden die beim trochoiden Fräsen relevanten Parameter: Radius des Fräswerkzeugs; Radius der Kreisbahnen, auf welchen der Bezugspunkt des Fräsers bewegt wird; Fräserzustellung; Zahnvorschub des Fräsers; so bemessen und über die gesamte Fräsbearbeitung konstant gehalten, dass über die gesamte Fräsbearbeitung einerseits die zulässigen Schnittkräfte nicht überschritten werden und andererseits die Späne stets gut abgeführt werden können. Daraus resultiert jedoch nach dem Stand der Technik eine sich stark ändernde Umschlingung des Fräsers. Daraus folgt, dass beim aus dem Stand der Technik bekannten trochoiden Fräsen die Effektivität der Fräsbearbeitung beschränkt ist. Es ergeben sich Nachteile hinsichtlich Fräszeit und Standzeit des Fräswerkzeugs.

Zudem offenbart EP 1 034 865 A1 ein Fräsverfahren zur Herstellung von Fertigteilen mit beliebiger Kontur, beim dem das Fräswerkzeug zur Bearbeitung eines Rohteils auf einer kontinuierlichen, spiralförmigen Bahn geführt wird und während des Fräsvorgangs kontinuierlich Material abgetragen wird, ohne dass das Fräswerkzeug abgehoben oder das Werkstück neu eingespannt wird.

Hiervon ausgehend liegt der vorliegenden Erfindung das Problem zu Grunde, ein neuartiges Fräsverfahren zur Fertigung von Bauteilen vorzuschlagen.

Dieses Problem wird dadurch gelöst, dass das eingangs genannte Fräsverfahren durch die Merkmale des kennzeichnenden Teils des Patentanspruchs 1 weitergebildet ist.

Erfindungsgemäß wird nach dem Erreichen einer maximal zulässigen Umschlingung des Fräswerkzeuges die Krümmung in jedem Bahnpunkt einer jeden Bahn in Abhängigkeit bzw. als Funktion des Werkzeugradius des Fräswerkzeuges, der gewünschten Seitenwände bzw. Vertiefungen und einer Rohteilkontur bzw. Fräskontur der zuletzt durchfahrenen Fräsbahn derart bestimmt, dass für jeden Bahnpunkt die Umschlingung des Fräswerkzeugs auf eine maximal zulässige Umschlingung optimiert wird. Hierdurch lässt sich die Fräszeit reduzieren. Weiterhin erhöht sich die Standzeit bzw. Nutzungszeit des Fräswerkzeug, da die Schneideneintritte des Fräswerkzeugs zur Durchführung der Fräsbearbeitung reduziert werden.

Nach einer vorteilhaften Ausgestaltung der Erfindung wird zu Beginn bzw. am Anfang jeder Bahn das Fräswerkzeug derart in den zu fräsenden Werkstoff hineingefahren, dass ein Bahnvektor des Fräswerkzeugs in tangentialer Richtung zu einer zu fräsenden Seitenwand des zu fertigenden Bauteils verläuft. Das Fräswerkzeug wird so lange in dieser Richtung in den Werkstoff hineingefahren, bis die maximal zulässige Umschlingung des Fräswerkzeugs erreicht ist. Vorzugsweise ist bis auf einen Austrittsbereich des Fräswerkzeugs, in welchem der Fräser aus dem zu fräsenden Werkstoff herausbewegt wird, in jedem nachfolgenden Bahnpunkt der Bahn die maximal zulässige Umschlingung des Fräswerkzeugs gewährleistet.

Bevorzugte Weiterbildungen der Erfindung ergeben sich aus den abhängigen Unteransprüchen und der nachfolgenden Beschreibung.

Ein Ausführungsbeispiel der Erfindung wird, ohne hierauf beschränkt zu sein, an Hand der Zeichnung näher erläutert. In der Zeichnung zeigt:
- Fig. 1:: eine stark schematisierte Darstellung zur Verdeutlichung des trochoiden Fräsens nach dem Stand der Technik;
- Fig. 2:: die sich beim trochoiden Fräsens nach dem Stand der Technik einstellende . Umschlingung des Fräswerkzeugs;
- Fig. 3:: eine stark schematisierte Darstellung eines zu fräsenden, durch zwei gekrümmte Seitenwände begrenzten Strömungskanals mit Bahnen im Sinne des trochoiden Fräsens nach dem Stand der Technik,
- Fig. 4:: die sich beim trochoiden Fräsen nach dem Stand der Technik einstellende Umschlingung des Fräswerkzeugs in Abhängigkeit des Fräsbahnradius;
- Fig. 5:: eine sich beim erfindungsgemäßen trochoiden Fräsen einstellende Umschlingung des Fräswerkzeugs; und
- Fig. 6:: sich beim erfindungsgemäßen trochoiden Fräsen einstellende Bahnen.

Nachfolgend wird die hier vorliegende Erfindung unter Bezugnahme auf die Figuren in größerem Detail erläutert. Bevor jedoch die Details des erfindungsgemäßen Verfahrens dargestellt werden, sollen nachfolgend einige Begriffe definiert werden, auf die später Bezug genommen wird.

Die Fräsbearbeitung des zu bearbeitenden Werkstücks bzw. Werkstoffs erfolgt mithilfe eines Werkzeugs, einem sogenannten Fräser. Der Fräser verfügt in der Regel über einen kreisrundem Querschnitt mit einem Werkzeugradius R_{FW}.

Beim Fräsen steht der Fräser im Eingriff mit dem Werkstoff. Der Kreisbogenabschnitt des kreisrundem Querschnitts des Fräsers, der mit dem Werkstoff in Eingriff steht, bestimmt bzw. definiert die sogenannte Umschlingung des Fräswerkzeugs.

Zur Bearbeitung des Werkstücks wird das Werkzeug bzw. der Fräser relativ zum Werkstück bzw. Werkstoff bewegt. Die Bewegung des Werkzeugs bzw. Fräsers relativ zum Werkstück wird durch sogenannte Werkzeugkoordinaten beschrieben, wobei die Werkzeugkoordinaten die Position eines Werkzeugbezugspunkt definieren. Die Bewegung des Werkzeugbezugspunkts bei der Fräsbearbeitung des Werkstücks bezeichnet man als Werkzeugbahn bzw. Fräsbahn.

Ausgehend von einer Werkzeugspitze bzw. dem Werkzeugbezugspunkt erstreckt sich ein Vektor entlang einer Werkzeugachse bzw. eines Werkzeugschaftes des Werkzeugs bzw. Fräsers. Diesen Vektor entlang der Werkzeugachse ausgehend von der Werkzeugspitze in Richtung des Werkzeugschaftes bezeichnet man als Werkzeugvektor.

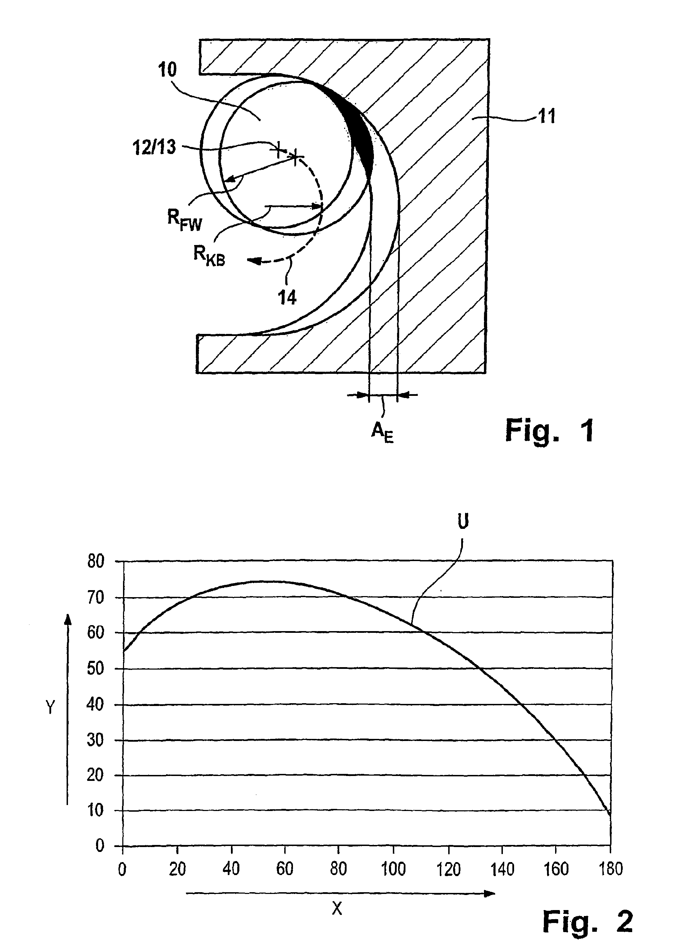

Fig. 1 bis 4 verdeutlichen die Verhältnisse beim konventionellen trochoiden Fräsen, wie es aus dem Stand der Technik bekannt ist. So zeigt Fig. 1 ein Fräswerkzeug 10, welches in ein zu bearbeitendes Werkstück 11 zur Fräsbearbeitung desselben hineinragt. Das Fräswerkzeug 10 wird derart durch das Werkstück 11 bewegt, dass sich nach der Fräsbearbeitung ein Bauteil mit einer gewünschten, dreidimensionalen Freiformfläche ergibt.

Gemäß Fig. 1 verfügt das Fräswerkzeug 10 über einen kreisförmigen Querschnitt mit einem Werkzeugradius R_{FW}. Beim Fräsen wird das Fräswerkzeug 10 zur Gewährleistung einer zentrischen Rotation desselben um eine Achse 12 des Fräswerkzeugs 10 drehend angetrieben. Beim konventionellen trochoiden Fräsen wird gemäß Fig. 1 ein auf der Achse 12 liegender Bezugspunkt 13 des Fräswerkzeugs auf einer kreisförmigen Bahn 14 bewegt, wobei diese Kreisbahn 14 einen Radius R_{KB} aufweist. Diesen beiden Bewegungen des Fräswerkzeugs 10 wird eine translatorische Vorschubbewegung entweder auf einer geraden oder gekrümmten Vorschubbahn überlagert. Die Überlagerung dieser drei Bewegungen des Fräswerkzeugs 10 ergibt das konventionelle trochoide Fräsen nach dem Stand der Technik, wobei das Fräswerkzeug 10 mit einer radialen Fräserzustellung A_{E} relativ zum Werkstück 11 bewegt wird.

Beim trochoiden Fräsen im Sinne des Standes der Technik ist die Umschlingung des Fräswerkzeugs 10, also der Abschnitt des kreisförmigen Querschnitts des Fräswerkzeugs, der mit dem zu fräsenden Werkstück 11 in Eingriff steht, nicht konstant. Dies kann insbesondere Fig. 2 entnommen werden, bei der entlang der X-Achse die Position des Fräswerkzeugs 10 auf der Kreisbahn mit dem Radius R_{KB} und auf der Y-Achse die Umschlingung U des Fräswerkzeugs 10 aufgetragen ist. So kann Fig. 2 entnommen werden, dass die Umschlingung des Fräswerkzeugs 10 abhängig von der Position desselben auf der Kreisbahn 14 stark schwankt.

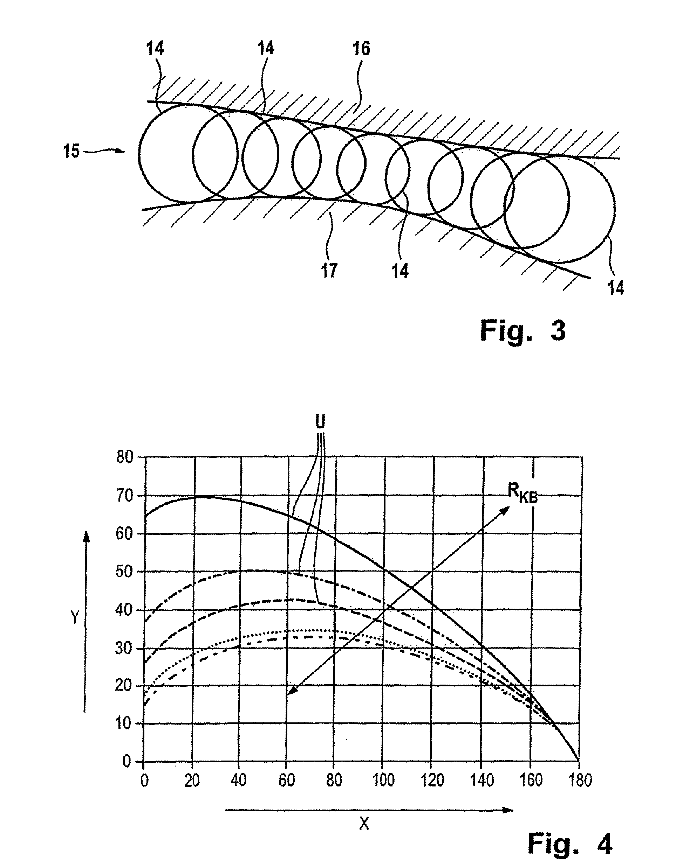

Wird das trochoide Fräsen zum Herstellen von integral beschaufelten Rotoren für Gasturbinen, also von sogenannten Bladed Disks (Blisks) verwendet, so zeigt Fig. 3, dass ein mithilfe des trochoiden Fräsen herauszuarbeitender Strömungskanal 15 von zwei gekrümmt und nicht parallel zueinander verlaufenden Seitenwänden 16, 17 begrenzt wird. Daraus folgt unmittelbar, dass der Radius R_{KB}, auf welchem der Bezugspunkt 13 des Fräswerkzeugs 10 bewegt wird, sich von Kreisbahn 14 zu Kreisbahn 14 ändert. Ändert sich jedoch der Radius R_{KB} der Kreisbahn 14, so hat dies, wie Fig. 4 zeigt, auch Auswirkungen auf die Umschlingung U des Fräswerkzeugs. So ist in Fig. 4 auf der X-Achse wiederum die Position des Fräswerkzeugs 10 entlang der Kreisbogen 14 aufgetragen. Auf der Y-Achse ist wiederum die Umschlingung U des Fräswerkzeugs 10 aufgetragen. Fig. 4 zeigt für sechs unterschiedliche Radien den Verlauf der Umschlingung des Fräswerkzeugs in Abhängigkeit von der Position desselben auf den Kreisbahnen 14. Bei kleiner werdenden Radien ändert sich die Umschlingung des Fräswerkzeugs 10 immer stärker.

Aus den oben dargestellten Zusammenhängen des trochoiden Fräsens, wie es aus dem Stand der Technik bekannt ist, folgt unmittelbar, dass eine maximal zulässige Umschlingung des Fräswerkzeugs 10, die sich daraus ergibt, dass anfallende Späne sicher abgeführt werden müssen, nur bei einem bestimmten Radius einer Bahn 14 und einer bestimmten Position des Fräswerkzeugs 10 auf dieser Bahn 14 eingehalten werden kann. Bei allen anderen Positionen des Fräswerkzeugs 10 auf dieser Bahn und bei allen anderen Bahnen mit unterschiedlichen Radien hingegen liegt beim trochoiden Fräsen nach dem Stand der Technik die Umschlingung des Fräswerkzeugs stets unterhalb der maximal zulässigen und damit optimalen Umschlingung.

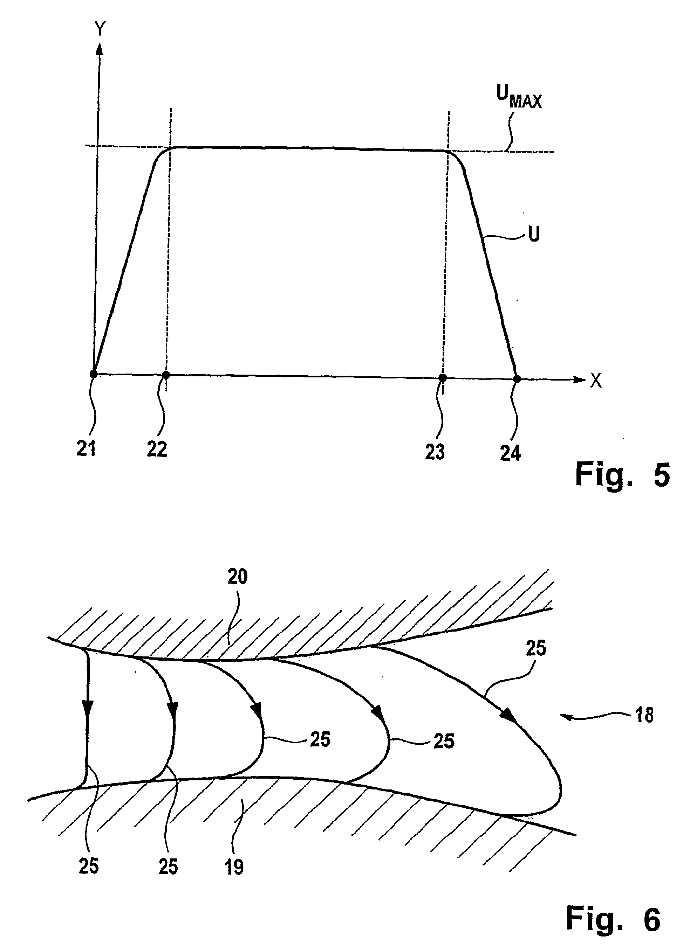

Mit der Erfindung wird ein Fräsverfahren vorgeschlagen, bei welchem das aus dem Stand der Technik bekannte trochoide Fräsen derart optimiert wird, dass unabhängig der Bahn, auf welcher das Fräswerkzeug 10 bewegt wird, und unabhängig von der Position des Fräswerkzeugs 10 auf der Bahn, nach dem Erreichen einer maximal zulässigen Umschlingung des Fräswerkzeuges die Krümmung in jedem Bahnpunkt einer jeden Bahn in Abhängigkeit des Werkzeugradius, der herauszufräsenden Vertiefungen und einer Fräskontur der zuletzt durchfahrenen Bahn derart bestimmt wird, dass in jedem Bahnpunkt die Umschlingung des Fräswerkzeuges auf eine maximal zulässige Umschlingung optimiert wird. Dies wird nachfolgend unter Bezugnahme auf Fig. 5 und 6 in größerem Detail erläutert.

Es liegt nun im Sinne der hier vorliegenden Erfindung, den Bezugspunkt des Fräswerkzeugs nicht mehr auf kreisförmigen Bahnen zu bewegen, sondern allgemeiner auf gekrümmten Bahnen. Die Krümmung in jedem Bahnpunkt einer jeden Bahn wird dabei in Abhängigkeit des Werkzeugradius, der herauszufräsenden Vertiefungen und einer Fräskontur der zuletzt durchfahrenen Bahn derart bestimmt, dass für jeden Bahnpunkt eine optimierte Umschlingung des Fräswerkzeugs gewährleistet ist. Für jeden Bahnpunkt wird die Umschlingung des Fräswerkzeugs in Richtung auf die maximal zulässige Umschlingung optimiert, ohne jedoch die maximal zulässige Umschlingung zu überschreiten.

Fig. 6 zeigt einen zu fräsenden Strömungskanal 18, der von zwei gekrümmt und nicht parallel zueinander verlaufenden Seitenwänden 19, 20 begrenzt ist. Zu Beginn bzw. am Anfang einer jeden Bahn wird das Fräswerkzeug derart in den zu fräsenden Werkstoff hineingefahren, dass ein Bahnvektor des Fräswerkzeugs, welcher die Bewegungsrichtung desselben bestimmt, in tangentialer Richtung zu der Seitenwand 20 verläuft, die herauszufräsen ist und an welcher der Fräsvorgang begonnen wird. In dieser tangentialen Richtung wird das Fräswerkzeug solange in den Werkstoff hineingefahren, bis die maximal zulässige Umschlingung des Fräswerkzeugs erreicht ist.

Nach dem Erreichen der maximal zulässigen Umschlingung des Fräswerkzeugs wird der Bahnvektor des Fräswerkzeugs und damit die Krümmung in jedem Bahnpunkt so eingestellt, dass vorzugsweise in jedem nachfolgenden Bahnpunkt der Bahn die maximal zulässige Umschlingung des Fräswerkzeugs gewährleistet ist bzw. einhalten wird. Der Bahnvektor bzw. die Krümmung in jedem Bahnpunkt wird dabei als Funktion des Werkzeugradius R_{FW} des Fräswerkzeugs, als Funktion der Kontur der gewünschten bzw. zu fräsenden Seitenwände oder Vertiefungen und als Funktion einer Rohteilkontur bzw. einer Fräskontur der zuletzt durchfahrenen Bahn bestimmt. Nach dem Erreichen der maximal zulässigen Umschlingung des Fräswerkzeugs kann dies für jeden Bahnpunkt der Bahn eingehalten werden, bis auf die Bahnpunkte, die am Ende der gekrümmt verlaufenden Bahnen liegen und entlang derer das Fräswerkzeug aus dem zu fräsenden Werkstoff bzw. zu bearbeitenden Werkstück herausgeführt wird.

So zeigt Fig. 5 in einem Diagramm die mithilfe des erfindungsgemäßen Verfahrens zu erzielende Umschlingung. Auf der X-Achse ist die Position des Fräswerkzeugs 10 entlang der Bahn aufgetragen. Auf der Y-Achse ist die Umschlingung U des Fräswerkzeugs 10 aufgetragen. Zu Beginn einer jeden Bahn, der durch den Punkt 21 dargestellt ist, tritt das Fräswerkzeug 10 in Kontakt mit dem zu bearbeitenden Werkstück, wobei in diesem Punkt 21 demnach die Umschlingung des Fräswerkzeugs gerade noch Null beträgt. In diesem Punkt liegt das Fräswerkzeug an der herauszufräsenden Seitenwand 20 in tangentialer Richtung an. In dieser tangentialen Richtung wird das Fräswerkzeug so lange weiter in den Werkstoff bzw. das Werkstück hineinbewegt, bis die maximal zulässige Umschlingung U_{MAX} erreicht ist. Dies entspricht dem Punkt 22 in Fig. 5. Nach dem Erreichen der maximal zulässigen Umschlingung U_{MAX} im Punkt 22 wird die Krümmung in jedem weiteren Bahnpunkt so eingestellt, dass die Umschlingung des Fräswerkzeugs in jedem weiteren Bahnpunkt der maximal zulässigen Umschlingung entspricht. Erst am Ende der gekrümmt verlaufenden Bahn, an welchem das Fräswerkzeug aus dem Werkstück herausbewegt werden muss, und zwar in tangentialer Richtung zur anderen Seitenwand, wird die Umschlingung nicht mehr auf dem maximal zulässigen Wert derselben gehalten, sondern vielmehr beim Herausfahren des Fräswerkzeugs aus dem Werkstoff sukzessive auf Null verringert. Dieser letzte Bahnabschnitt, der dem Herausfahren des Fräswerkzeugs aus dem Werkstück dient, liegt zwischen den Punkten 23 und 24.

Fig. 6 visualisiert den Krümmungsverlauf mehrerer Bahnen 25, die sich unter Verwendung des erfindungsgemäßen Verfahrens ergeben können. Der Krümmungsverlauf hängt selbstverständlich auch stark von den Konturen der herauszufräsenden Seitenwände und damit von der Kontur des herauszufräsenden Strömungskanals ab.

An dieser Stelle sei nochmals darauf hingewiesen, dass beim erfindungsgemäßen, optimierten trochoiden Fräsen bei der Bewegung des Werkzeugbezugspunkts auf den gekrümmten Bahnen selbstverständlich auch eine zentrische Rotation des Fräswerkzeugs um seine Werkzeugachse erfolgt. Die Bewegung des Fräswerkzeugs entlang der gekrümmten Bahnen 25 und die zentrische Rotation desselben werden vorzugsweise in entgegengesetztem Drehsinn durchgeführt. Dies resultiert dann in einem werkzeugschonenden sowie werkstückschonenden Gleichlauffräsen.

Weiterhin werden diese beiden Bewegungen von einer translatorischen Vorschubbewegung des Werkzeugbezugpunkts überlagert. Wie beim konventionellen trochoiden Fräsen nach dem Stand der Technik werden demnach auch beim optimierten, trochoiden Fräsen drei Bewegungen überlagert, nämlich einerseits die zentrische Rotation des Fräswerkzeugs um seine Achse, die Bewegung des Bezugspunkts des Fräswerkzeugs entlang der gekrümmten Bahn und die Vorschubbewegung des Werkzeugsbezugspunkts. Im Sinne der Erfindung wird jedoch die Krümmung in jedem Bahnpunkt der Bahnen nach dem Erreichen einer maximal zulässigen Umschlingung des Fräswerkzeuges in Abhängigkeit des Werkzeugradius, der herauszufräsenden Vertiefung und einer Fräskontur der zuletzt durchfahrenen Bahn dahingehend bestimmt, dass in jedem Bahnpunkt die Umschlingung des Fräswerkzeuges auf eine maximal zulässige Umschlingung optimiert wird.

Bedingt dadurch, dass demnach die Umschlingung des Fräswerkzeugs in nahezu jedem Bahnpunkt der maximal zulässigen Umschlingung entspricht, wird stets das maximal mögliche Spanvolumen abgetragen. Damit kann im Sinne der Erfindung mithilfe des optimierten trochoiden Fräsens die benötigte Fräszeit erheblich reduziert werden. Das optimierte trochoide Fräsverfahren wirkt sich des weiteren positiv auf die Standzeit des Fräswerkzeugs aus. Die Standzeit des Fräswerkzeugs wird nämlich auch durch die Anzahl der Schneideintritte in den Werkstoff bestimmt. Da beim erfindungsgemäßen Fräsverfahren die Umschlingung des Fräswerkzeugs in jedem Bahnpunkt in Richtung auf die maximal zulässige Umschlingung optimiert wird, reduziert sich auch die Anzahl der erforderlichen Schneideintritte in den Werkstoff. Damit kann auch die Standzeit der Fräswerkzeuge erhöht werden.

Das erfindungsgemäße Fräsverfahren kann insbesondere zur Fertigung von integral beschaufelten Rotoren für Gasturbinen, sogenannten Blades Disks (Blisks) oder Bladed Rings (Blinks), eingesetzt werden. Es eignet sich jedoch auch zur Fräsbearbeitung von sogenannten Scallops.

Es liegt weiterhin im Sinne des erfindungsgemäßen Fräsverfahrens, den oben beschriebenen drei Bewegungsanteilen einen vierten Bewegungsanteil zu überlagern.

So kann der Bewegung des Werkzeugsbezugspunkts entlang der gekrümmten Bahnen, der zentrischen Rotation des Fräswerkzeugs um seine Achse und der translatorischen Vorschubbewegung des Bezugspunkts des Fräswerkzeugs zusätzlich eine Schwenkbewegung der Achse des Fräswerkzeugs zur Erzeugung einer Taumelbewegung mit variabler Neigung der Achse überlagert werden. Dies dient der optimalen Anschmiegung des Fräswerkzeugs an nicht-vertikale Seitenwände. Hierzu kann die Achse des Fräswerkzeugs periodisch im Sinne einer Taumelbewegung um einen definierten Achspunkt im Bereich einer Fräserspitze des Fräswerkzeugs geschwenkt werden, wobei die Achse zeitweilig parallel zu Tangenten der zu fräsenden Seitenwände steht.

## Patentansprüche

1. Fräsverfahren zur Fertigung von Bauteilen aus schwer zerspanbaren Werkstoffen unter Erzeugung von Vertiefungen mit mindestens einer Seitenwand, insbesondere zur Fertigung von integral beschaufelten Rotoren für Gasturbinen, wobei die Vertiefungen insbesondere Strömungskanäle und die Seitenwände insbesondere Schaufeloberflächen bilden, wobei ein Fräswerkzeug mit einem Werkzeugradius zur Gewährleistung einer zentrischen Rotation desselben um eine Achse des Fräswerkzeugs drehend angetrieben wird, wobei ein vorzugsweise auf der Achse liegender Bezugspunkt des Fräswerkzeugs auf mehreren gekrümmten Bahnen bewegt wird, wobei die Bahnen vorzugsweise unterschiedliche Krümmungen aufweisen, und wobei das Fräswerkzeug mit einer radialen Fräserzustellung relativ zum Werkstoff auf den Bahnen bewegt wird, **dadurch gekennzeichnet, dass** nach dem Erreichen einer maximal zulässigen Umschlingung des Fräswerkzeuges die Krümmung in jedem Bahnpunkt einer jeden Bahn in Abhängigkeit des Werkzeugradius, der herauszufräsenden Vertiefungen und einer Fräskontur der zuletzt durchfahrenen Bahn derart bestimmt wird, dass in jedem Bahnpunkt die Umschlingung des Fräswerkzeugs auf eine maximal zulässige Umschlingung optimiert wird.

2. Verfahren nach Anspruch 1, **dadurch gekennzeichnet, dass** die Krümmung in jedem Bahnpunkt einer jeden Bahn derart bestimmt wird, dass für jeden Bahnpunkt die maximal zulässige Umschlingung des Fräswerkzeugs nicht überschritten wird.

3. Verfahren nach Anspruch 1 oder 2, **dadurch gekennzeichnet, dass** zu Beginn bzw. am Anfang jeder Bahn das Fräswerkzeug derart in den zu fräsenden Werkstoff hineingefahren wird, dass ein Bahnvektor des Fräswerkzeugs in tangentialer Richtung zu einer herauszufräsenden Seitenwand des zu fertigenden Bauteils verläuft, und dass das Fräswerkzeug so lange in dieser Richtung in den Werkstoff hineingefahren wird, bis die maximal zulässige Umschlingung des Fräswerkzeugs erreicht ist.

4. Verfahren nach Anspruch 1, **dadurch gekennzeichnet, dass** bis auf einen Austrittsbereich des Fräswerkzeugs aus dem zu fräsenden Werkstoff in jedem nachfolgenden Bahnpunkt der Bahn die maximal zulässige Umschlingung des Fräswerkzeugs gewährleistet ist.

5. Verfahren nach einem der Ansprüche 1 bis 4, **dadurch gekennzeichnet, dass** der Bewegung des Bezugspunkts des Fräswerkzeugs entlang der optimiert gekrümmten Bahnen und der zentrischen Rotation des Fräswerkzeugs um seine Achse eine translatorische Vorschubbewegung des Bezugspunkts des Fräswerkzeugs überlagert wird.

6. Verfahren nach Anspruch 5, **dadurch gekennzeichnet, dass** die translatorische Vorschubbewegung des Bezugspunkts des Fräswerkzeugs auf einer geraden und/oder gekrümmten Vorschubbahn erfolgt.

7. Verfahren nach einem der Ansprüche 1 bis 6, **dadurch gekennzeichnet, dass** die Bewegung des Fräswerkzeugs entlang der optimiert gekrümmten Bahnen und die zentrischen Rotation desselben mit entgegengesetztem Drehsinn durchgeführt wird.

8. Verfahren nach einem der Ansprüche 1 bis 7, **dadurch gekennzeichnet, dass** der Bewegung des Bezugspunkts des Fräswerkzeugs entlang der optimiert gekrümmten Bahnen, der zentrischen Rotation des Fräswerkzeugs um seine Achse und der translatorischen Vorschubbewegung des Bezugspunkts des Fräswerkzeugs eine Schwenkbewegung der Achse des Fräswerkzeugs zur Erzeugung einer Taumelbewegung mit variabler Neigung der Achse überlagert wird.

9. Verfahren nach Anspruch 8, **dadurch gekennzeichnet, dass** hierzu die Achse des Fräswerkzeugs um einen Punkt im Bereich einer Fräserspitze periodisch verschwenkt wird.

## Claims

1. A milling method for manufacturing structural parts from materials that are hard to machine, involving the formation of depressions with at least one side wall, in particular for manufacturing integrally bladed rotors for gas turbines, in which the depressions form in particular flow channels and the side walls form in particular blade surfaces, in which a cutting tool with a tool radius is rotatably driven to ensure a centric rotation of the tool about an axis of the cutting tool, in which a reference point of the cutting tool preferably lying on the axis moves on a plurality of curved paths, in which the paths preferably have different curvatures, and in which the cutting tool moves with a radial milling cutter setting relative to the material on the paths, **characterised in that** after reaching a maximum permissible contacting of the cutting tool, the curvature at each point of each path is determined in dependence on the tool radius, the depressions to be milled out and a milling contour of the last traversed path, in such a way that at each point on the path the contacting of the cutting tool is optimised to a maximum permissible contacting.

2. A method according to claim 1, **characterised in that** the curvature is determined at each point on each path in such a way that for each point on the path the maximum permissible contacting of the cutting tool is not exceeded.

3. A method according to claim 1 or 2, **characterised in that** at the beginning or at the start of each path the cutting tool is driven into the material to be milled in such a way that a path vector of the cutting tool runs in the tangential direction to a side wall to be milled out of the structural part being manufactured, and that the cutting tool is driven in this direction into the material until the maximum permissible contacting of the cutting tool is reached.

4. A method according to claim 1, **characterised in that** at each successive point on the path the maximum permissible contacting of the cutting tool is ensured up to an exit region of the said cutting tool.

5. A method according to one of claims 1 to 4, **characterised in that** a translational feed movement of the reference point of the cutting tool is superimposed on the movement of the reference point of the cutting tool along the optimised curved paths and on the centric rotation of the cutting tool about its axis.

6. A method according to claim 5, **characterised in that** the translational feed movement of the reference point of the cutting tool takes place on a straight and/or curved feed path.

7. A method according to one of claims 1 to 6, **characterised in that** the movement of the cutting tool along the optimised curved paths and the centric rotation of the said cutting tool take place in opposite rotational directions.

8. A method according to one of claims 1 to 7, **characterised in that** a swivelling movement of the axis of the cutting tool so as to produce a gyratory movement with a variable inclination of the axis is superimposed on the movement of the reference point of the cutting tool along the optimised curved paths, on the centric rotation of the cutting tool about its axis and on the translational feed movement of the reference point of the cutting tool.

9. A method according to claim 8, **characterised in that** for this purpose the axis of the cutting tool is periodically swivelled about a point in the region of a milling cutter tip.

## Revendications

1. Procédé de fraisage pour la réalisation de pièces en matériaux difficilement usinables moyennant la formation de creux ayant au moins une paroi latérale, en particulier pour la fabrication de rotors à aubage intégral pour des turbines à gaz, les creux formant en particulier des conduits d'écoulement et les parois latérales formant en particulier des surfaces d'aubes, sachant qu'un outil de fraisage, avec un rayon permettant de garantir une rotation centrée de celui-ci, est entraîné en rotation autour d'un axe de l'outil de fraisage, un point de référence de l'outil de fraisage, situé de préférence sur l'axe, se déplaçant sur plusieurs trajectoires courbes, les trajectoires ayant de préférence des courbures différentes, et l'outil de fraisage se déplaçant sur les trajectoires selon une avance radiale de la fraise par rapport au matériau, **caractérisé en ce que**, lorsqu'une enveloppe maximum admissible de l'outil de fraisage est atteinte, la courbure en chaque point de chaque trajectoire est déterminée en fonction du rayon de l'outil, de la profondeur de fraisage des creux et d'un contour de fraisage de la trajectoire parcourue en dernier, de telle sorte qu'en chaque point de la trajectoire, l'enveloppe de l'outil de fraisage est optimisée pour obtenir une enveloppe maximum admissible.

2. Procédé selon la revendication 1, **caractérisé en ce que** la courbure en chaque point de chaque trajectoire est déterminée de telle sorte qu'en chaque point de la trajectoire, l'enveloppe maximum admissible de l'outil de fraisage ne soit pas dépassée.

3. Procédé selon la revendication 1 ou 2, **caractérisé en ce qu'**au début, plus précisément au commencement de chaque trajectoire, l'outil de fraisage pénètre dans le matériau à fraiser, de telle sorte qu'un vecteur de la trajectoire de l'outil de fraisage s'étende dans la direction tangentielle par rapport à une paroi latérale à fraiser dans la pièce à réaliser, et **en ce que** l'outil de fraisage pénètre dans cette direction dans le matériau jusqu'à ce que l'enveloppe maximum admissible de l'outil de fraisage soit atteinte.

4. Procédé selon la revendication 1, **caractérisé en ce que**, hormis une zone de sortie de l'outil de fraisage hors du matériau à fraiser, l'enveloppe maximum admissible de l'outil de fraisage est garantie dans chaque point consécutif de la trajectoire.

5. Procédé selon l'une quelconque des revendications 1 à 4, **caractérisé en ce qu'**un mouvement d'avance de translation du point de référence de l'outil de fraisage se superpose au mouvement du point de référence de l'outil de fraisage le long des trajectoires à courbure optimisée et à la rotation centrée de l'outil de fraisage autour de son axe.

6. Procédé selon la revendication 5, **caractérisé en ce que** le mouvement d'avance de translation du point de référence de l'outil de fraisage suit une trajectoire droite et/ou courbe.

7. Procédé selon l'une quelconque des revendications 1 à 6, **caractérisé en ce que** le mouvement de l'outil de fraisage le long des trajectoires à courbure optimisée et la rotation centrée de celui-ci sont effectués avec un sens de rotation opposé.

8. Procédé selon l'une quelconque des revendications 1 à 7, **caractérisé en ce qu'**un mouvement de pivotement de l'axe de l'outil de fraisage en vue de générer un mouvement oscillant avec une inclinaison variable de l'axe se superpose au mouvement de l'outil de fraisage le long des trajectoires à courbure optimisée, à la rotation centrée de l'outil de fraisage autour de son axe et au mouvement d'avance de translation du point de référence de l'outil de fraisage.

9. Procédé selon la revendication 8, **caractérisé en ce que**, à cet effet, l'axe de l'outil de fraisage pivote périodiquement autour d'un point dans la zone d'une pointe de la fraise.
